# FASCICULE DE BREVET EUROPEEN

(11) **EP 0 662 227 B1**
(45) Date de publication et mention de la délivrance du brevet: **13.06.2001**
(21) Numéro de dépôt: 94922906.6
(22) Date de dépôt: 11.07.1994
(51) Int. Cl.: G06F 12/08

(54) **PROCEDE DE GESTION DE MEMOIRES D'UN SYSTEME INFORMATIQUE, SYSTEME INFORMATIQUE ET MEMOIRE METTANT EN OEUVRE LE PROCEDE**
VERFAHREN ZUR VERWALTUNG VON SPEICHERN EINES RECHNERSYSTEMS SOWIE RECHNERSYSTEM UND SPEICHER ZUR DURCHFÜHRUNG DES VERFAHRENS
COMPUTER SYSTEM MEMORY MANAGEMENT METHOD, AND COMPUTER SYSTEM AND MEMORY USING SAID METHOD

(30) Priorité: 15.07.1993 FR 9308709
(43) Date de publication de la demande: 12.07.1995
(73) Titulaire: BULL S.A., 92800 Puteaux (FR)
(72) Inventeur: ABILY, Jacques, F-78370 Plaisir (FR); PAIRAULT, Jean-Jacques, F-92100 Boulogne (FR); PERRAUDEAU, Jean, F-75012 Paris (FR)
(74) Mandataire: Denis, Hervé
(86) Numéro de dépôt international: FR9400868
(87) Numéro de publication internationale: WO9502865

(56) Documents cités:
- EP-A- 0 443 755
- EP-A- 0 489 556
- EP-A- 0 507 063
- THE 20TH ANNUAL INTERNATIONAL SYMPOSIUM ON COMPUTER ARCHITECTURE 16 Mai 1993 , SAN DIEGO, CALIFORNIA US COX ET AL. 'Adaptive Cache Coherency for Detecting Migratory Shared Data'
- IBM TECHNICAL DISCLOSURE BULLETIN vol. 29, no. 12 , Mai 1987 , NEW YORK US pages 5208 - 5209 'Broadcast of mostly-read-only highly shared cache lines in multiprocessor systems'
- COMPUTER ARCHITECTURE NEWS vol. 17, no. 3 , Juin 1989 , NEW YORK US pages 2 - 15 EGGERS ET AL. 'Evaluating the performance of four snooping cache coherency protocols' cité dans la demande

## Description

L'invention se rapporte à un procédé de gestion des échanges entre des mémoires électroniques d'un système informatique, ainsi qu'à un système informatique, une mémoire et un support d'enregistrement qui mettent en oeuvre ce procédé. L'invention s'applique plus particulièrement aux systèmes informatiques multiprocesseurs à mémoire logiquement partagée et/ou physiquement distribuée.

Un système informatique est constitué d'un sous-système central pouvant communiquer avec un ou plusieurs sous-systèmes périphériques par l'intermédiaire d'unités d'entrée-sortie. Le sous-système central d'un grand système comprend ordinairement plusieurs processeurs reliés à une mémoire centrale et aux unités d'entrée-sortie.

Chaque processeur a pour fonction l'exécution des instructions des programmes contenus dans la mémoire centrale. Ces instructions et les données nécessaires à leur exécution sont accessibles par le processeur en utilisant les moyens d'adressage de la mémoire centrale. Cependant, compte tenu des temps d'accès relativement longs dans la mémoire centrale, les processeurs sont habituellement munis d'une antémémoire (cache memory) beaucoup plus rapide mais de contenu limité à un certain nombre d'extraits du contenu de la mémoire centrale. Par exemple, la mémoire centrale est constituée d'éléments de mémoire faits ordinairement chacun d'un circuit intégré de mémoire dynamique DRAM (Dynamic Random Access Memory), de 16 mégabits par exemple et demandant actuellement environ 60 nanosecondes de temps d'accès à un bit, tandis que l'antémémoire est faite couramment d'une mémoire vive statique (SRAM) demandant de l'ordre de 10 nanosecondes de temps d'accès à un bit. Une antémémoire se compose d'une mémoire de données et d'un mécanisme de gestion des adresses de ces données. La mémoire de données d'une antémémoire est divisée en blocs ayant une même taille prédéterminée et correspondant chacun à un quantum d'échange avec la mémoire centrale. Un bloc de mémoire est donc une entité logique définie par une structure comprenant essentiellement une partie d'adresse et une partie réservée aux données. Chaque bloc est donc identifié par son adresse, tandis que le contenu spécifique d'un bloc de mémoire en constitue une copie. En d'autres termes, chaque bloc est fait d'une ou plusieurs copies. Une antémémoire peut être du type associatif à un seul niveau, plus connu sous le nom de "direct mapped cache memory" ou d'un type associatif à plusieurs niveaux. Dans une antémémoire, le mécanisme de gestion des adresses est appelé couramment répertoire ou "cache tags".

Un processeur est composé de divers circuits de traitement. On trouvera par exemple une description de ces circuits adaptés à un processeur microprogrammé dans la demande de brevet de la demanderesse EP-A-0434483. Dans ce document, les processeurs étaient connectés par l'intermédiaire de leur antémémoire à un bus leur permettant de communiquer avec la mémoire centrale. Chaque processeur et son antémémoire résidaient ensemble sur une même carte de circuits imprimés reliant plusieurs boîtiers de circuits intégrés. La capacité d'intégration sans cesse croissante des circuits permet aujourd'hui d'intégrer chaque processeur dans une puce et d'y associer au moins une partie de l'antémémoire.

Les systèmes informatiques évolués actuels font intervenir d'autres niveaux de mémoires entre la mémoire et l'antémémoire du processeur. Par exemple, une antémémoire intermédiaire est utilisée comme cela est décrit dans le brevet précité. Dans ce brevet, les antémémoires proches de processeurs communiquent avec la mémoire centrale au travers d'une antémémoire intermédiaire. Les antémémoires proches des processeurs sont alors appelées antémémoires privées et se partagent l'antémémoire intermédiaire, ainsi appelée antémémoire partagée. Une antémémoire privée se compose aussi d'une mémoire de données et d'un mécanisme de gestion d'adresse. D'une manière plus générale, une hiérarchie plus ou moins complexe peut exister entre les mémoires reliant un processeur à une mémoire centrale. Dans cette hiérarchie, on dit que le niveau est plus élevé quand il est plus proche du processeur. D'autre part, la mémoire centrale, constitutive du niveau le plus bas, peut aussi être partagée et ses éléments peuvent être distribués dans le système informatique. L'invention s'applique d'une manière générale à la gestion des échanges entre deux niveaux d'une hiérarchie quelconque de mémoires électroniques d'un système informatique.

L'invention se rapporte au problème posé par la cohérence de la gestion de ces échanges. Le problème est lié au fait qu'une copie d'un bloc de mémoire demandé par un processeur peut être modifiée par le processeur et ne plus correspondre ainsi à la copie stockée dans une antémémoire normalement disponible à d'autres processeurs.

La solution actuelle consiste à utiliser l'une ou l'autre de deux stratégies contraires de gestion des échanges, l'une se faisant selon un mode de mise à jour et l'autre selon un mode d'invalidation. Lorsqu'une copie d'un bloc a été modifiée par un premier processeur, cette copie devient la copie de référence et l'invalidation consiste à invalider toutes les autres copies du bloc qui ne sont plus à jour. L'invalidation est une stratégie simple, parce qu'elle réduit le nombre de copies à gérer et réduit ainsi le trafic. La réalisation est également simple, puisqu'elle est faite en modifiant un bit d'état dans le répertoire. L'invalidation est terminée quand un message d'acquittement est reçu par l'antémémoire qui possède la copie de référence. L'acquittement peut être implicite, par construction de la machine par exemple, ou avoir lieu après un espace de temps prédéterminé. Cependant, lorsqu'un second processeur demande une copie du bloc, son antémémoire doit aller chercher la copie de référence dans l'antémémoire du premier processeur. Il s'ensuit une diminution du taux de succès d'accès du second processeur à son antémémoire, et un ralentissement de sa vitesse de traitement. La mise à jour de toutes les copies existantes d'un bloc offre l'avantage de les rendre disponibles aux autres processeurs et évite ainsi au processeur qui demande une copie de ce bloc d'aller chercher la copie de référence au niveau d'un autre processeur. Mais la mise à jour nécessite l'envoi de messages plus volumineux à toutes les mémoires qui ont une copie du bloc et l'acquittement que toutes ont la bonne copie. Ces messages encombrent beaucoup le trafic entre les mémoires et ralentissent donc l'accès moyen d'un processeur à une copie de bloc non directement disponible. Cet inconvénient est aggravé par le fait que toutes les copies mises à jour ne sont pas utilisées.

Dans la technique antérieure, le mode de gestion est prédéterminé et s'applique à l'ensemble des blocs contenus dans les mémoires, ou à un sous-ensemble tel qu'une page de mémoire. Par exemple, le logiciel peut être conçu de façon à décider d'employer la mise à jour quand la page est partagée de façon intime entre plusieurs processeurs, et l'invalidation quand elle est peu ou non partagée. Une fois le mode choisi pour une page, le logiciel l'emploie du début jusqu'à la fin de l'exécution du programme sur cette page. Ce mode s'applique donc à tous les blocs de la page, et en général pendant toute l'exécution d'un programme. Les deux modes représentent donc des stratégies statiques, simples d'emploi. L'exploitation du mode choisi est faite dans le circuit de commande de chacune des mémoires. L'avantage de l'emploi de modes statiques réside aussi dans la simplicité matérielle des moyens de leur mise en oeuvre dans le circuit de commande de chacune des mémoires. Cependant, le mode choisi peut n'être adapté qu'à une phase du programme et qu'à un nombre restreint de blocs d'une même page. Si le développeur de logiciel veut adapter le mode à chaque phase d'un programme, il doit compliquer beaucoup son programme.

L'invention résout le problème posé par la cohérence de la gestion des échanges entre les mémoires d'un système informatique, en appliquant dynamiquement à chaque bloc le mode de gestion le mieux adapté à l'utilisation qui en est faite. L'invention s'applique donc à chaque bloc et consiste à faire pour chaque bloc un choix de gestion selon un mode qui n'est plus statique, mais qui est dynamiquement évolutif en fonction de l'utilisation qui est faite du bloc.

Le document EP-A-0443755 décrit un procédé de gestion cohérente des échanges entre les antémémoires d'un système informatique, consistant à commuter entre un mode de mise à jour et un mode d'invalidation des copies de blocs de mémoire en fonction d'un seuil représentatif de l'inefficacité du mode employé pour chacun des blocs. Cependant, ce procédé est fondé sur la technique des antémémoires dite "snoopy". Cette technique est basée sur l'emploi d'un bus partagé par toutes les antémémoires, qui peuvent donc voir tous les messages qui transitent sur ce bus et prendre les messages qui l'intéressent, d'où le mot "snoopy". L'emploi du bus partagé signifie donc que toutes les mémoires qui le partagent sont informées dans chacun des échanges de cohérence. Il en résulte que toutes les antémémoires voient passer ces échanges et peuvent prendre une décision individuelle pour le choix du mode de gestion, indépendante des autres antémémoires et de façon décentralisée (indépendamment des mémoires de niveau plus bas). Ceci est bien connu de l'homme du métier et ressort bien de la description de ce document. Une variante de ce procédé est aussi décrite dans un article de Eggers et al. dans la revue Computer Architecture Conference Proceedings, vol. 17, n° 3, juin 1989, Washington, USA, pages 2-15 : "Evaluating the performance of four snooping cache coherency protocols".

Le document EP-A-443 755 décrit l'état de la technique en accord avec le préambule de la revendication 1.

L'invention a pour objet un procédé de gestion cohérente des échanges entre des mémoires en un nombre donné dans un système informatique, consistant à commuter entre un mode de mise à jour et un mode d'invalidation des copies de blocs de mémoire en fonction d'un seuil représentatif de l'inefficacité du mode employé pour chacun des blocs, caractérisé en ce que au moins l'un des changements de mode est retardé par une condition de déclenchement effectif qui, si elle n'est pas vérifiée, maintient le procédé dans le mode utilisé.

Le procédé ne s'applique pas aux systèmes utilisant un bus partagé (technique "snoopy") où toutes les mémoires sont informées dans chacun des échanges de cohérence. Divers exemples illustrent le procédé conforme à l'invention.

L'invention a aussi pour objet un système informatique comprenant une hiérarchie de mémoires et des moyens de gestion cohérente des échanges entre les mémoires par commutation entre un mode de mise à jour et un mode d'invalidation des copies de blocs de mémoire, caractérisé en ce que les moyens de gestion mettent en oeuvre le procédé conforme à l'invention.

L'invention a pour objet corollaire une mémoire comprenant une mémoire de données pour stocker des copies de blocs de mémoire, et un circuit de commande, caractérisée en ce que le circuit de commande inclut un algorithme câblé pour la mise en oeuvre du procédé conforme à l'invention.

En d'autres termes, l'invention offre l'avantage d'être mise en oeuvre sous forme d'un algorithme simple câblé dans le matériel (hardware) d'une mémoire, qui permet l'adaptation dynamique de la gestion des blocs de la mémoire au comportement constaté de ces blocs au cours de leur utilisation.

L'invention ressort de la description qui suit, donnée à titre d'exemple et faite en référence aux dessins annexés.

Dans les dessins :
- la figure 1 est une vue synoptique et partielle d'un système informatique pris comme exemple pour recevoir le procédé de gestion conforme à l'invention ;
- la figure 2 est une vue schématique d'une copie de bloc de mémoire pouvant servir à la mise en oeuvre de l'invention ;
- la figure 3 est un diagramme illustrant un premier exemple de mise en oeuvre du procédé conforme à l'invention ;
- la figure 4 est un diagramme illustrant un second exemple de mise en oeuvre du procédé illustré dans la figure 2 ;
- la figure 5 est un diagramme illustrant une première variante de mise en oeuvre du second exemple du procédé illustré dans la figure 4 ;
- la figure 6 est un diagramme illustrant une seconde variante de mise en oeuvre du second exemple du procédé illustré dans la figure 4 ; et
- la figure 7 est une vue schématique d'un bloc de mémoire utilisé pour la mise en oeuvre de la variante du procédé illustré dans la figure 6.

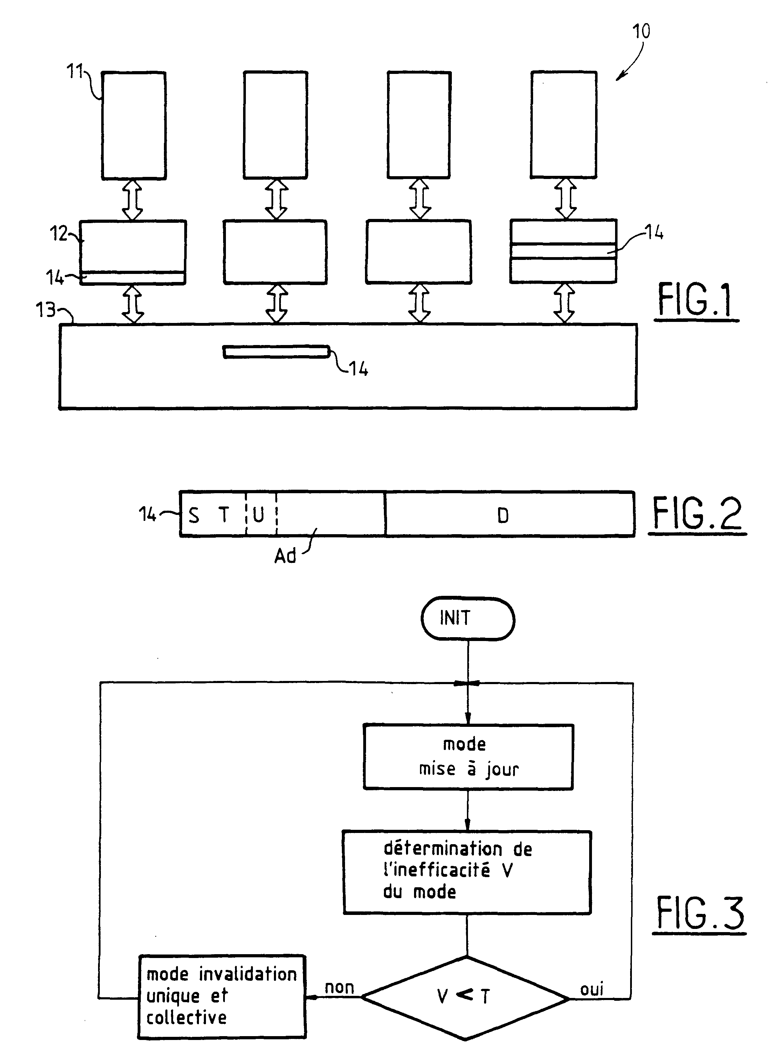

Dans le système informatique 10 représenté sur la figure 1, quatre processeurs 11 pourvus de leurs antémémoires respectives 12 sont en liaison avec une mémoire 13. En fonctionnement, les données nécessaires à chaque processeur 11 sont demandées à l'antémémoire associée 12. Si l'antémémoire ne les a pas, elle les lit dans la mémoire 13 pour en faire une copie par blocs de mémoire 14 de taille prédéterminée. La structure d'une copie 14 d'un bloc de mémoire est illustrée dans la figure 2 et comprend de manière classique une partie d'adresse Ad et une partie réservée aux données D.

Le procédé de gestion des échanges entre les mémoires 12 et 13 du système informatique consiste en l'emploi du mode de mise à jour ou du mode d'invalidation des copies d'un bloc de mémoire. Si l'invalidation est choisie, il est par exemple connu d'inclure dans l'adresse Ad de chaque bloc 14 deux bits ST représentatifs de l'état du bloc. On distingue de manière classique quatre états fondamentaux maintenant normalisés sous le code MESI. Dans ce code, l'état modifié M correspond au cas où une antémémoire est la seule détentrice d'une copie modifiée d'un bloc, dite copie de référence, et que les autres copies disponibles dans le système ne sont pas mises à jour. Dans ce cas, l'antémémoire détentrice de la copie ayant l'état M est responsable de fournir et de mettre à jour la mémoire si elle veut se débarrasser de cette copie. Une copie ayant l'état exclusif E est aussi la copie de référence détenue par une antémémoire, mais dans ce cas la mémoire centrale en a une copie à jour. L'état partagé S (Shared) désigne une copie ayant plusieurs détenteurs, dont éventuellement la mémoire centrale. Les détenteurs peuvent être potentiels selon la stratégie de gestion adoptée. Enfin, on trouve l'état de copie invalide I quand la mémoire correspondante a une copie du bloc qui n'a pas été mise à jour et n'est donc pas détentrice de la copie de référence. Il existe encore d'autres états optionnels normalisés, tels que l'état partagé modifié qu'on affecte à une copie de référence qui a des copies identiques dans d'autres antémémoires, mais non dans la mémoire centrale. Ce cas intervient dans le mode de mise à jour des copies des antémémoires, à l'exception de celle détenue par la mémoire centrale. Dans ce cas, les copies mises à jour portent l'état partagé S et l'antémémoire qui est détentrice de la copie de référence, en général marquée M, a la responsabilité de la mise à jour des autres antémémoires et éventuellement de la mémoire centrale. Ce cas met en relief que la mise à jour peut être partielle, par exemple limitée aux antémémoires privées qui sont rattachées à une même antémémoire partagée. L'invalidation consiste donc seulement à modifier l'état des deux bits représentatifs de l'état des copies autres que la copie de référence.

L'invention est fondée sur un procédé consistant à déterminer au moins un seuil T représentatif de l'inefficacité V du mode employé et, lorsque le seuil T est atteint, à utiliser le second mode. Les figures 2 et 3 illustrent un premier exemple de mise en oeuvre du procédé de l'invention.

Dans le diagramme de la figure 3, la mise à jour est choisie comme mode de gestion initial. L'inefficacité V est déterminée, puis comparée au seuil T. Tant que l'inefficacité V reste inférieure au seuil T, la mise à jour continue. Sinon, le mode de gestion devient l'invalidation. Dans l'exemple représenté sur la figure 3, le procédé de gestion consiste à faire, lorsque le seuil T est atteint, une invalidation globale et unique de toutes les copies non à jour du même bloc de mémoire et à retourner au mode de mise à jour. L'invalidation unique et globale élimine donc toutes les copies non à jour d'un même bloc qui ont été jugées inutiles ou faiblement utilisées. Une option plus perfectionnée mais plus complexe pourrait n'éliminer que les inutiles. On comprend d'une manière générale que cette invalidation peut ne pas concerner l'ensemble des copies d'un bloc du système, mais seulement une partie sélective, par exemple en n'invalidant que les copies jugées inutiles pour un processeur ou pour d'autres critères. L'invalidation permet ainsi d'économiser des mises à jour lors de modifications ultérieures des copies valides restantes ou reconstituées et à retourner ainsi en un état favorable à la mise à jour. D'une manière générale, cet exemple de procédé de gestion consiste à faire, lorsqu'un seuil d'inefficacité de la mise à jour est atteint, une invalidation collective et unique de toutes les copies non à jour du bloc de mémoire concerné et à retourner au mode de mise à jour. L'invalidation collective peut être globale ou sélective. L'invalidation globale est la plus simple à mettre en oeuvre.

La figure 2 illustre un exemple de structure d'une copie de bloc 14 utilisée pour la détermination de l'inefficacité d'un mode de gestion du procédé conforme à l'invention. La copie de bloc de mémoire 14 illustrée comprend dans l'adresse Ad, en plus des deux bits d'état ST, un bit d'utilité U. Le bit d'utilité U est par exemple mis dans un premier état (0 par exemple) lors de l'alimentation d'une première copie ou d'une mise à jour et dans un second état (1) lors d'une lecture de la copie. Par conséquent, si par exemple un processeur 11 lit dans son antémémoire 12 une copie de bloc 14, le bit d'utilité U est placé dans le second état 1 s'il était dans le premier état 0 ou est maintenu dans le second état 1. Si ultérieurement le processeur modifie les données d'une copie de bloc 14, les bits d'état ST vont être changés pour marquer l'état modifié M de la copie et on peut choisir de laisser le bit d'utilité U inchangé ou de le placer dans le premier état 0 s'il était dans le second état 1. La mise à jour globale ou partielle des autres copies place leur bit d'utilité U dans le premier état 0. Le premier état 0 du bit d'utilité U est donc bien représentatif de l'inefficacité de la mise à jour des exemplaires du bloc tandis que, a contrario, le second état est représentatif de l'efficacité, voire même de la nécessité de la mise à jour. Plus généralement, le bit d'utilité U incorporé dans une copie est représentatif de l'utilisation de cette copie, de sorte qu'il est aussi représentatif de l'efficacité du mode de gestion des copies.

La détermination de l'inefficacité V de la mise à jour et du seuil d'inefficacité T peut être faite selon divers critères. On distinguera les critères matériels des critères temporels qui, dans la pratique, sont mêlés et adaptés les uns aux autres. Comme exemples de critères matériels, le seuil peut être simplement un nombre absolu de copies du bloc, dont les bits d'utilité U sont dans le premier état, un pourcentage des copies existantes du bloc ou un pourcentage par rapport à un nombre de copies prédéterminé pour chacun des blocs, par exemple le nombre maximal de copies que peut avoir un bloc dans le système. La détermination peut encore être faite en fonction du nombre de blocs au niveau des antémémoires 12, ou en fonction du degré de partage prévisible des copies entre les différents processeurs 11. De préférence, le mode de gestion ne sera pas modifié en considération de l'inefficacité d'une mise à jour sur une seule copie mais plutôt en considération de l'inefficacité d'une mise à jour totale ou d'une partie significative de l'ensemble des copies d'un bloc.

Les critères temporels permettent de décider du moment de la détermination de l'inefficacité d'un mode. Par exemple, si le mode en cours est la mise à jour, l'inefficacité peut être déterminée à chaque nouvelle mise à jour, en profitent de l'acquittement pour récupérer les informations relatives aux bits d'utilité des copies mises à jour. On comprend aussi que ces informations pourraient être stockées dans le circuit de commande de la mémoire concernée 12 ou 13 et, après un nombre donné de mises à jour, déterminer l'inefficacité du mode employé à partir de l'ensemble des informations stockées et de critères matériels adaptés à ce cas. Par exemple, il suffirait de savoir si, parmi le nombre donné de mises à jour, un nombre ou un pourcentage de ces mises à jour a été utile pour déterminer l'inefficacité de la mise à jour. Un autre critère temporel peut consister à déterminer l'inefficacité d'un mode à des intervalles de temps prédéterminés, dépendants ou non d'événements dans le fonctionnement du système ou du mode de gestion. Par exemple, on peut faire une analyse cyclique de l'inefficacité de la mise à jour et, si une copie 14 a servi, rester en mise à jour. Cependant, il est souvent préférable d'évaluer l'inefficacité d'un mode sur des copies d'un bloc lorsque des opérations ont été faites sur ce bloc, et non indépendamment de ces opérations, car la fréquence d'utilisation des blocs varie beaucoup selon les blocs. L'invention offre l'avantage d'adapter dynamiquement le mode de gestion à la fréquence d'utilisation de chaque bloc. Par exemple, l'évaluation de l'efficacité ou de l'inefficacité d'un mode et la détermination du mode approprié peuvent être faites avantageusement à l'occasion d'un échange entre deux mémoires.

Le seuil T est de préférence stocké dans chacune des mémoires 12 et 13 du système 10, par exemple dans leur circuit de commande. De même, la détermination de l'efficacité ou de l'inefficacité sera avantageusement faite selon un algorithme câblé dans le circuit de commande de chacune des mémoires. Il est clair aussi que la détermination de l'inefficacité d'un mode peut être faite autrement qu'avec l'incorporation d'un bit d'utilité U dans chaque copie de bloc 14. Le bit U a l'avantage d'être un moyen simple de détermination de l'utilité ou non de la copie et d'être utilisable par les mêmes moyens de traitement des bits d'état ST d'une copie de bloc 14. Le bit d'utilité U peut être considéré comme un bit d'état, similaire aux bits d'état ST, de sorte que ses états pourraient être intégrés avec eux. En outre, même si la détermination de l'inefficacité d'un mode se fait à partir d'un bit d'utilité U, son incorporation à chaque copie de bloc 14 n'est pas nécessaire. Par exemple, le bit d'utilité U peut se trouver seulement dans une seule copie de chaque bloc, de préférence dans la mémoire 13 ou dans une antémémoire partagée dans une hiérarchie d'au moins trois niveaux de mémoires. Cela obligerait chaque antémémoire de prévenir la mémoire 13 de chaque mise à jour par des messages de notification de référence d'une copie du bloc, qui sont avantageusement asynchrones. On comprend que le bit d'utilité U peut alors être remplacé par d'autres moyens plus perfectionnés et plus précis de détermination de l'inefficacité V du mode ou, a contrario, de son utilité. Si un bit d'utilité U est employé, il peut être incorporé, de manière générale, dans au moins une copie de bloc 14 ou dans l'ensemble des copies de chaque bloc.

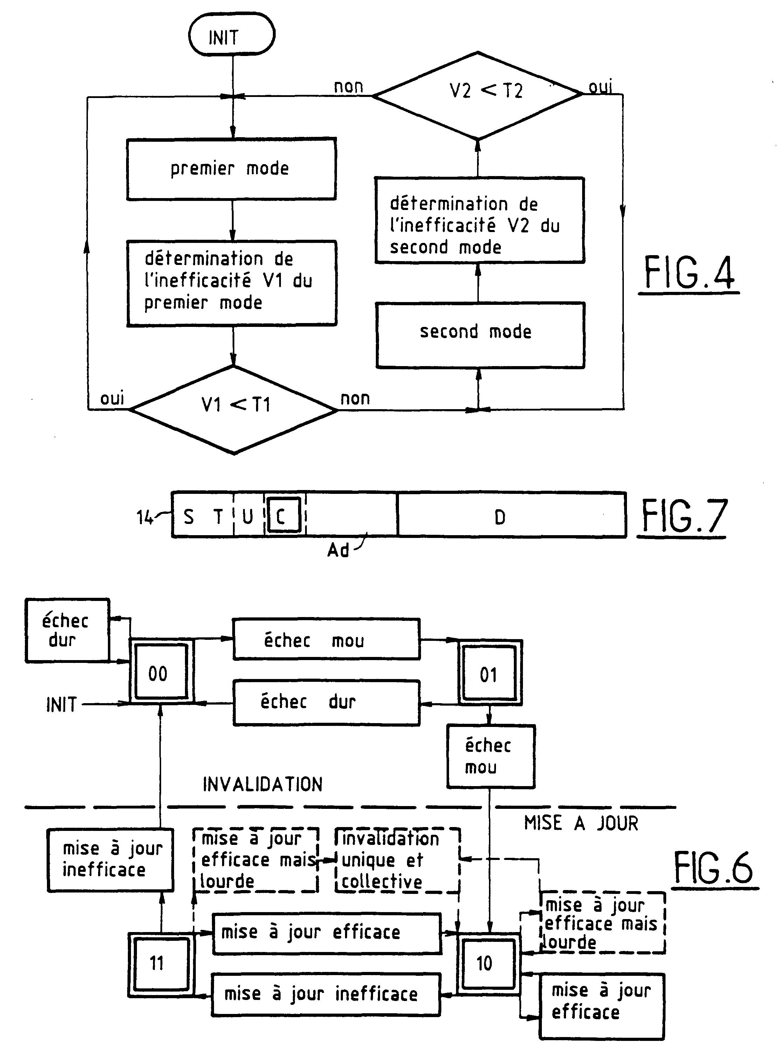

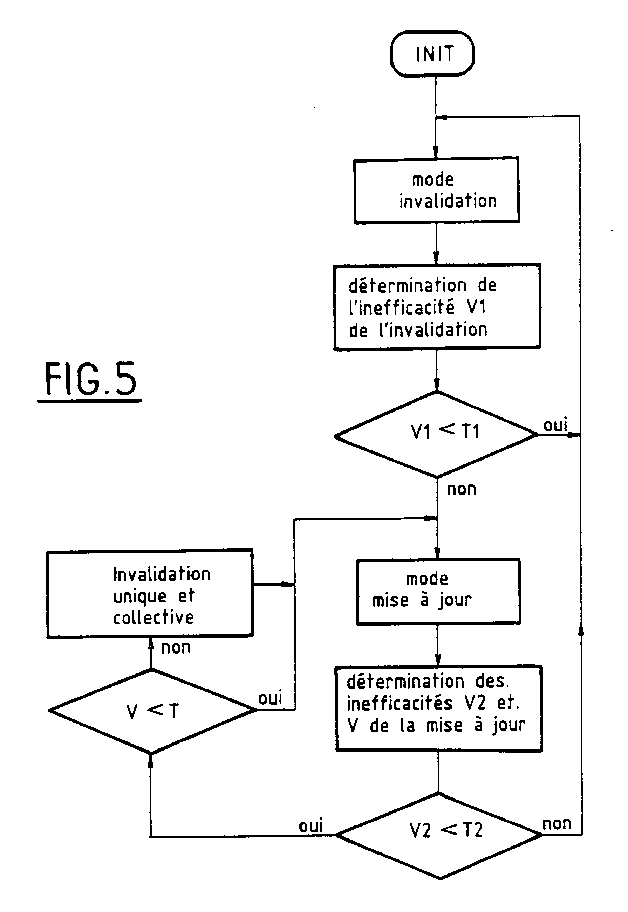

Le diagramme de la figure 4 illustre un second exemple de mise en oeuvre du procédé de l'invention. Lors de l'initialisation du système, un premier mode de gestion est sélectionné par le logiciel du système. L'inefficacité V1 de ce premier mode est déterminée, puis comparée avec un premier seuil d'utilité T1. Le premier mode se poursuit s'il s'avère efficace (V1 < T1). Sinon, le procédé de gestion se fait selon le second mode. L'inefficacité V2 du second mode est déterminée, puis comparée avec un second seuil d'utilité T2. Le second mode se poursuit s'il s'avère utile (V2 < T2), ou le procédé de gestion revient au premier mode si le second n'est plus utile (V2 = T2). La mise en oeuvre de ce procédé peut se faire d'une manière similaire à celle relative aux exemples des figures 2 et 3. Il est à noter que l'invalidation normalement utilisée dans l'exemple de la figure 4 ne se fait plus de la même manière que celle décrite en référence avec les figures 2 et 3. Dans l'exemple de la figure 4, l'invalidation est celle ordinairement utilisée comme alternative à la mise à jour. De préférence, ce mode sera choisi comme mode initial, car la mise à jour étant coûteuse, on cherche à limiter son emploi où elle s'avère bénéfique.

Le diagramme de la figure 5 illustre un exemple de variante de mise en oeuvre du procédé combinant les exemples décrits en référence aux figures 3 et 4. Selon cette variante, le procédé de gestion est placé initialement en mode d'invalidation. Comme dans le procédé représenté sur la figure 3, l'inefficacité V1 de l'invalidation est déterminée, puis comparée avec le seuil T1. Si l'invalidation est efficace (V1 < T1), ce mode est maintenu. Sinon, le mode devient la mise à jour. L'inefficacité de la mise à jour est déterminée de deux façons différentes en fonction de critères différents. D'abord, une inefficacité V2 et un seuil T2 sont déterminés en fonction de critères de contre-productivité de la mise à jour. En d'autres termes, ces critères traduisent que la mise à jour est inefficace parce qu'elle n'est pas adaptée à la situation en cours . Donc, comme illustré dans la figure 5, si l'inefficacité V2 est supérieure au seuil T2, le mode de gestion retourne à l'invalidation. Dans le cas contraire, une inefficacité V et un seuil T sont déterminés de façon à traduire que la mise à jour peut rester le mode le mieux adapté si on supprime les mises à jour inutiles. Dans ce sens, l'inefficacité V et le seuil T sont de même nature que ceux présentés en référence à la figure 3. Ainsi, une.invalidation unique et collective à un ensemble de copies du bloc de mémoire suffit pour que la mise à jour puisse continuer efficacement. D'une manière générale, l'inefficacité V et le seuil T peuvent être déterminés de façon différente ou non de V2 et T2. Par exemple, la mise à jour des six copies disponibles d'un bloc peut être considérée comme un mode bien adapté à la gestion de ces copies si au moins deux copies ont été lues. Le seuil d'inefficacité T2 pour non adaptation de la mise à jour peut être zéro copie lue. Dans ce cas , V2 = T2, le mode de gestion retourne à l'invalidation ordinaire. Le seuil d'inefficacité T peut être une seule copie lue, signifiant que la mise à jour a servi mais qu'elle est lourde à gérer. Si tel est le cas, V = T, les autres copies du bloc sont invalidées en une seule fois, globalement ou sélectivement, et le mode retourne à la mise à jour.

Le diagramme de la figure 6 illustre une autre variante du procédé représenté sur la figure 4. La variante de la figure 6 est fondée sur une distinction entre deux états d'échec de lecture d'une antémémoire. Dans le premier état, la copie 14 du bloc de mémoire demandé ne s'y trouve pas et sa demande aboutit sur un échec qu'on appellera échec dur. Dans le second état, la copie du bloc de mémoire ayant l'adresse Ad demandée se trouve dans l'antémémoire, mais sa lecture a été invalidée comme copie non à jour. La demande de la copie aboutit aussi sur un échec, qu'on appellera échec mou. D'autre part, la variante du procédé illustré dans la figure 6 est mise en oeuvre en utilisant chaque copie de bloc 14 ayant par exemple la structure représentée sur la figure 7. Cette structure est celle de la figure 2 et incorpore dans la zone d'adresse Ad, en plus des bits d'état ST et du bit d'utilité U, un code C de deux bits dans l'exemple préféré.

Pour décrire le procédé illustré dans la figure 6, on supposera que lorsqu'un bloc de mémoire 14 de la mémoire 13 n'a pas encore été copié, les deux bits du code C sont à zéro et que le mode en cours est l'invalidation. Si un processeur 11 rencontre un échec dur en lisant dans son antémémoire 12, celle-ci fait une copie du bloc 14 dans la mémoire 13 et le mode reste inchangé sur l'invalidation. Si la copie du bloc est très peu utilisée, l'antémémoire 12 effectuera plus tard un remplacement de la copie du bloc par celle d'un autre bloc. Par conséquent, si par la suite le même processeur 11 redemande la copie précédente, il rencontrera à nouveau un échec dur. L'invalidation est donc bien le mode adapté à ce cas.

On supposera maintenant qu'un processeur 11 lisant son antémémoire 12 trouve la copie 14 recherchée, mais dont les données D ont été invalidées. Cet événement correspond à un échec mou et indique que la mise à jour aurait évité cet échec et amélioré la performance du système 10. En d'autres termes, elle aurait été le mode mieux adapté à la situation présente. Cet événement pourrait servir directement de seuil pour changer le mode de gestion en mise à jour. Cependant, pour assurer une meilleure stabilité du procédé, le seuil est retardé par une condition de déclenchement effectif qui, si elle n'est pas vérifiée, maintient le mode de gestion en cours qui est ici l'invalidation. Dans l'exemple illustré, le code C est changé en l'état 01, signifiant que le seuil est atteint et qu'il attend qu'une condition de déclenchement effectif soit remplie pour changer le mode. On dira que le seuil est conditionnel et que le mode est alors transitoire. Si un échec mou se présente à nouveau sur le même bloc, dans la même antémémoire ou dans une autre antémémoire 12, cet événement constitue la condition de déclenchement du seuil et confirme que la mise à jour était le mode mieux adapté. Le mode de gestion devient alors la mise à jour. Dans l'exemple illustré, le code C est changé en l'état 10 pour signifier que le mode est la mise à jour. Par contre, si dans l'état du code C = 01 un échec dur se présente, cet événement signifie que l'invalidation est bien le mode qui convient, de sorte que le mode d'invalidation est maintenu. Dans l'exemple illustré, le code C retourne à son état 00 d'invalidation ferme.

On suppose maintenant que le système 10 fonctionne en mode de mise à jour correspondant au code C = 10. Des modifications ultérieures d'une ou de copies 14 de chaque bloc de mémoire par l'un des processeurs 11 seront donc suivies par des mises à jour dans les antémémoires 12, et les lectures faites par les processeurs 11 seront des succès et non des échecs. A partir de cette situation, la question qui se pose est alors de savoir si la mise à jour reste utile. Les échecs pouvant survenir de la part de processeurs 11 demandant l'information pour la première fois ne sont plus pris en compte et on peut alors déterminer au moins un seuil représentatif de l'utilité du mode de mise à jour selon notamment les critères d'utilité qui ont été décrits en relation avec les figures 2 à 5. Par exemple, à chaque mise à jour d'une copie 14 d'un bloc de mémoire dans une antémémoire 12, l'antémémoire analyse l'état de l'ensemble des bits d'utilité U du bloc conformément aux exemples précédemment décrits. Si la mise à jour est jugée utile, la valeur du code C est maintenue à 10, comme illustré dans la figure 6 par la boucle incorporant cette valeur de code. Selon cette variante, le seuil de mise à jour est conditionnel. Si le seuil est atteint, le changement du mode est retardé par une condition. Par exemple, la mesure de l'inefficacité V du mode peut servir de condition, de sorte que si l'évolution de cette mesure confirme l'inefficacité du mode, cette condition sera remplie. Dans l'exemple illustré, si la mise à jour est jugée inefficace, la valeur du code C est modifiée en 11 signifiant une mise à jour transitoire. En d'autres termes, au lieu de changer de mode, le mode de mise à jour est maintenu dans un état transitoire assurant une meilleure stabilité du procédé et évitant que le procédé "oscille" entre la mise à jour et l'invalidation ordinaire.

On suppose maintenant que le mode de mise à jour est dans son état transitoire correspondant au code C = 11. Si à la mise à jour suivante les bits d'utilité ont évolué et traduisent une mise à jour efficace, le code C est ramené à la valeur 10 correspondant au mode de mise à jour ferme. Si au contraire, la mise à jour suivante est encore jugée inefficace, le mode de gestion devient l'invalidation et le code C prend la valeur 00. On se trouve alors à nouveau dans la situation initiale décrite ci-dessus.

Il est clair que le mode initial choisi par le système peut être la mise à jour. Il peut aussi être l'un des états transitoires, qui permettrait au système de s'établir rapidement dans le mode le mieux adapté. Les états transitoires décrits sont courts et peuvent être prolongés. Il faut toutefois veiller à ce que la stratégie ne devienne pas trop complexe et ne complique pas trop le fonctionnement de toutes les mémoires, ce qui provoquerait à son tour une cause d'attente dans la gestion des échanges entre les mémoires. De même, il est clair que l'un ou les deux états transitoires peuvent être supprimés. Par exemple, on pourrait supprimer l'état de mise à jour transitoire de code C = 11. En ce qui concerne le mode d'invalidation, il est possible de passer au mode transitoire après un nombre donné d'échecs mous et de retourner au mode ferme après un nombre donné d'échecs durs. Il en est de même pour le passage du mode transitoire au mode de mise à jour. On peut compléter ce procédé en y combinant celui de la figure 3. La figure 6 illustre par des traits tiretés un exemple de cette combinaison. Si dans le mode de mise à jour le code est 10 et la mise à jour est jugée efficace (V2 < T2 dans la figure 4), la mise à jour est maintenue. Si elle est jugée efficace mais trop lourde à gérer (V < T dans la figure 4), une invalidation collective et unitaire est faite et le mode retourne à la mise à jour. Si la mise à jour est inefficace (V2 > T2) la mise à jour devient transitoire et le code est mis à 11. Si, alors, la mise à jour est jugée efficace (V2 < T2), la mise à jour continue et le code redevient 10. Si elle est jugée efficace mais trop lourde (V < T), une invalidation unique et collective est faite et le mode redevient la mise à jour avec le code 10.

Dans le code C de deux bits qui a été décrit, les états du premier bit sont représentatifs des deux modes et les états du second bit sont représentatifs des deux modes transitoires. Plus généralement, le code C pourrait se limiter à un bit dont, par exemple, les états seraient représentatifs des deux modes, ou d'un mode et de son mode transitoire. On comprend que le procédé pourrait aussi utiliser un autre code C que celui décrit. De même, bien que le code C soit incorporé dans chaque copie 14, il est possible qu'il soit implanté seulement dans la mémoire 13. Ce cas serait même intéressant, puisque le code C se rapporte à toutes les copies d'un bloc. Plus généralement, le code C sera de préférence placé là où se prennent les décisions du mode de gestion. On verra ultérieurement que ces décisions peuvent se prendre aussi dans les antémémoires. Pour résumer, on peut dire de manière générale que le procédé de l'invention consiste, de façon optionnelle, à incorporer dans au moins une copie de bloc au moins un bit de code C représentatif d'au moins un mode, le mode pouvant être aussi un mode transitoire. Le bit U peut être incorporé dans les copies contenues dans les antémémoires 12 et non dans la mémoire 13, ou dans l'ensemble des copies contenues dans les mémoires 12 et 13, ou dans un nombre sélectionné de copies au moins égal à 1, par exemple les copies rattachées à un groupe donné de processeurs. Dans le cas où le code C est toujours associé au bit U, on comprend aussi que les deux peuvent se combiner sous une forme plus compacte ou plus performante. La description qui précède fait aussi ressortir que le code C pourrait, de même que pour le bit d'utilité U, être remplacé par un autre moyen, logiciel et/ou matériel, représentatif d'au moins les modes transitoires.

De manière plus générale, la description qui précède fait bien ressortir que le procédé de l'invention pour la gestion des échanges entre les mémoires d'un système informatique comprend, de manière classique, l'emploi d'un mode de mise à jour ou d'un mode d'invalidation des copies d'un bloc de mémoire. Mais l'invention se distingue de l'art antérieur par le fait qu'il consiste à déterminer un seuil représentatif de l'inefficacité du mode employé et, lorsque le seuil est atteint, à utiliser le second mode. On a vu en référence à la figure 3 que le seuil peut être une valeur, un nombre ou un pourcentage par exemple, et que cette valeur peut être définie par des critères matériels et temporels. Dans l'exemple illustré dans la figure 3, le procédé consiste à incorporer dans chaque copie d'un bloc de mémoire un bit d'utilité U dont les états sont représentatifs de l'utilisation de la copie correspondante. Cependant, on a vu que plus généralement on pouvait incorporer dans au moins une copie d'un bloc de mémoire un bit d'utilité. D'autre part, dans l'exemple illustré les critères de l'inefficacité sont basés sur l'exploitation des états du bit d'utilité. Il est clair que d'autres critères peuvent être pris, indépendants d'un bit d'utilité. On a vu aussi en référence à la figure 6 que si le mode employé est l'invalidation, le procédé consiste à distinguer parmi les échecs de lecture d'une mémoire les échecs durs correspondant à l'absence de la copie du bloc recherché et les échecs mous correspondant à la présence d'une telle copie, mais invalidée, et à considérer les échecs mous comme critères d'inefficacité de l'invalidation. En d'autres termes, le seuil peut être défini directement par un ou plusieurs échecs mous, ou par une valeur impliquant les échecs mous comme critères d'inefficacité parmi d'autres critères et/ou comme condition de déclenchement. D'autres événements que les échecs mous peuvent servir de critères additionnels ou de substitution.

Le premier exemple représenté sur les figures 2 et 3 a fait apparaître que si le mode employé est la mise à jour, le procédé consiste à utiliser le seuil T indiquant que ce mode est efficace mais trop lourd à gérer et, lorsque le seuil T est atteint, à utiliser une seule invalidation collective de copies d'un bloc et à retourner au mode de mise à jour. L'invalidation collective de copies signifie qu'elle peut être globale ou sélective à au moins une copie du bloc. D'autre part, l'invalidation unique peut être faite en plusieurs phases. Le second exemple représenté sur les figures 4 à 7 utilise l'invalidation ordinairement utilisée dans les systèmes informatiques. Ce second exemple a aussi illustré que le seuil d'un mode peut être retardé par une condition de déclenchement effectif, de sorte que si la condition n'est pas vérifiée, le procédé est maintenu dans le mode utilisé et que si elle est vérifiée, le procédé change de mode. Il est clair qu'un tel seuil peut être utilisé dans le premier exemple du procédé. Le cas inverse est représenté par les étapes en traits tiretés sur la figure 7. De même que pour la détermination du seuil et de l'inefficacité, la condition de déclenchement du seuil peut être une valeur et/ou un ou plusieurs événements tels que les échecs mous.

Par ailleurs, bien que le procédé de l'invention ait été décrit avec un système informatique 10 ayant une hiérarchie de mémoires à deux niveaux seulement, on peut utiliser le procédé selon l'invention avec un nombre plus grand de niveaux. La description qui précède fait bien ressortir que la mémoire 13 pourrait aussi être incluse comme antémémoire dans un niveau intermédiaire d'antémémoires associé à une mémoire de masse de plus bas niveau. Selon un premier exemple de mise en oeuvre de l'invention, on peut diviser la hiérarchie de N niveaux de mémoires en deux parties adjacentes, la partie haute fournissant les indications (événements, valeurs, ou états des bits U et du code C) pour la détermination de l'inefficacité de chaque mode et la partie basse décidant, à partir de ces indications, du mode à utiliser. Dans l'exemple de la figure 1, la décision serait alors prise dans la mémoire 13. Selon un autre exemple, la hiérarchie est divisée en branches ou en groupes de branches et la décision pourrait être laissée à leur initiative. Ainsi, les copies dans une ou plusieurs branches pourraient être gérées dans un mode approprié, qui pourrait être différent de celui utilisé dans d'autres. La combinaison de cet exemple avec le premier donnerait l'initiative de la décision à l'antémémoire qui aurait le niveau le plus élevé dans la partie basse. Selon un troisième exemple, la décision est prise par chacune des antémémoires, ou par une ou plusieurs antémémoires prédéterminées. Par exemple, dans un système où les acquittements retournent directement vers l'antémémoire demandant une mise à jour, ou en faisant en sorte qu'il en soit ainsi, la mémoire basse telle que 13 ne voyant plus transiter ces acquittements et, donc, les bits d'utilité, cette antémémoire serait alors capable de prendre l'initiative de la décision du mode à utiliser. Une possibilité est de transmettre la décision à la mémoire basse pour qu'elle puisse la mettre en oeuvre si la mémoire sait où se trouvent toutes les copies dans le cas dit de "directory based" (système à cohérence par répertoire). Dans un système où la mémoire basse ne sait pas où sont les copies, par exemple celui connu sous le nom de "broadcast" sur un bus ou celui utilisant le cas connu sous le nom de "snoopy", toutes les antémémoires voient passer les bits d'utilité et peuvent donc décider du mode. Ces exemples font ressortir, de manière générale, que la décision du mode de gestion des copies de chaque bloc de mémoire peut être, soit centralisée en un ou plusieurs points de la hiérarchie de mémoires, chaque point pouvant être prédéterminé comme par exemple la mémoire 13 ou bien être l'émetteur de la dernière mise à jour, soit prise par les mémoires 12, 13 simultanément et identiquement de façon distribuée.

## Revendications

1. Procédé de gestion cohérente des échanges entre des mémoires (12,13) dans un système informatique (10), consistant à commuter entre un mode mise à jour et un mode d'invalidation des copies de blocs de mémoire (14) en fonction d'un seuil (T₁,T₂) réprésentatif de l'inefficacité du mode employé pour chacun des blocs, caractérisé en ce que au moins l'un des changements de mode est retardé par une condition de déclenchement effectif qui, si elle n'est pas vérifiée, maintient le procédé dans le mode utilisé.

2. Procédé selon la revendication 1, caractérisé en ce qu'il distingue, lorsque le mode d'invalidation est utilisé, entre les échecs durs qui correspondent à l'absence d'une copie recherchée dans le bloc mémoire et les échecs mous qui correspondent à la présence de la copie recherchée mais invalidée, et en ce qu'il utilise les échecs mous comme critère pour l'inefficacité du mode d'invalidation et/ou pour la condition de déclenchement du mode d'invalidation au mode de mise à jour lorsque le seuil concerné est atteint.

3. Procédé selon l'une des revendications 1 ou 2, caractérisé en ce qu'il consiste à, lorsque la condition de déclenchement effectif n'est pas vérifiée pour passer du mode de mise à jour au mode d'invalidation, utiliser un second seuil (T) indiquant que le mode employé est efficace mais trop lourd à gérer et, lorsque le second seuil est atteint, à utiliser une invalidation collective de copies de bloc et à retourner au mode de mise à jour.

4. Procédé selon l'une des revendications 1 à 3, caractérisé en ce qu'il incorpore dans au moins une copie de bloc au moins un bit de code ( C ), représentatif d'au moins l'un des modes (mise à jour - invalidation) et/ou d'au moins l'un des modes transitoires caractérisés par la condition de déclenchement effectif.

5. Système informatique (10) comprenant une hiérarchie de mémoires (12,13) et des moyens de gestion cohérente des échanges entre les mémoires par commutation entre un mode de mise à jour et un mode d'invalidation des copies de blocs de mémoire, caractérisé en ce que les moyens de gestion mettent en oeuvre le procédé selon l'une des revendications 1 à 4.

6. Mémoire (12,13) comprenant une mémoire de données pour stocker des copies de blocs de mémoire, et un circuit de commande, caractérisée en ce que le circuit de commande inclut un algorithme câblé pour la mise en oeuvre du procédé défini par l'une des revendications 1 à 4.

## Patentansprüche

1. Verfahren zum kohärenten Steuern von Austauschvorgängen zwischen Speichern (12, 13) in einem Datenverarbeitungssystem (10), das darin besteht, zwischen einem Aktualisierungsmodus und einem Invalidierungsmodus von Kopien von Speicherblöcken (14) in Abhängigkeit von einem Schwellenwert (T₁, T₂), der die Unwirksamkeit eines für jeden der Blöcke verwendeten Modus repräsentiert, umzuschalten, dadurch gekennzeichnet, daß wenigstens einer der Moduswechsel durch eine Bedingung für die effektive Auslösung verzögert wird, die, wenn sie nicht verifiziert wird, das Verfahren im verwendeten Modus hält.

2. Verfahren nach Anspruch 1, dadurch gekennzeichnet, daß es, wenn der Invalidierungsmodus verwendet wird, zwischen harten Abbrüchen, die dem Fehlen einer im Speicherblock gesuchten Kopie entsprechen, und weichen Abbrüchen, die dem Vorhandensein der gesuchten, jedoch ungültig gemachten Kopie entsprechen, unterscheidet und daß es die weichen Abbrüche als Kriterium für die Unwirksamkeit des Invalidierungsmodus und/oder als Bedingung für die Auslösung des Übergangs vom Invalidierungsmodus zum Aktualisierungsmodus, wenn der betreffende Schwellenwert erreicht ist, verwendet.

3. Verfahren nach einem der Ansprüche 1 oder 2, dadurch gekennzeichnet, daß es dann, wenn die Bedingung für die effektive Auslösung des Übergangs vom Aktualisierungsmodus zum Invalidierungsmodus nicht verifiziert wird, darin besteht, einen zweiten Schwellenwert (T) zu verwenden, der angibt, daß der verwendete Modus wirksam, jedoch zu schwer zu steuern ist, und daß es dann, wenn der zweite Schwellenwert erreicht ist, darin besteht, eine kollektive Invalidierung von Blockkopien zu verwenden und zum Aktualisierungsmodus zurückzukehren.

4. Verfahren nach einem der Ansprüche 1 bis 3, dadurch gekennzeichnet, daß es in wenigstens eine Blockkopie wenigstens ein Code-Bit (C) einfügt, das wenigstens einen der Modi (Aktualisierung - Invalidierung) und/oder wenigstens einen der Übergangsmodi, die durch die Bedingung für die wirksame Auslösung gekennzeichnet sind, repräsentiert.

5. Datenverarbeitungssystem (10), das eine Hierarchie von Speichern (12, 13) und Mittel zur kohärenten Steuerung von Austauschvorgängen zwischen den Speichern durch Umschalten zwischen einem Aktualisierungsmodus und einem Invalidierungsmodus von Kopien von Speicherblöcken umfaßt, dadurch gekennzeichnet, daß die Steuerungsmittel das Verfahren nach einem der Ansprüche 1 bis 4 ausführen.

6. Speicher (12, 13), der einen Datenspeicher zum Speichern von Kopien von Speicherblöcken sowie eine Steuerschaltung umfaßt, dadurch gekennzeichnet, daß die Steuerschaltung einen verdrahteten Algorithmus für die Ausführung des durch einen der Ansprüche 1 bis 4 definierten Verfahrens enthält.

## Claims

1. Method for coherent management of exchanges between memories (12, 13) in a computer system (10), consisting in switching between an update mode and an invalidation mode for copies of memory blocks (14) depending on a threshold (T₁, T₂) representing the ineffectiveness of the mode used for each of the blocks, characterised in that at least one of the mode changes is delayed by an actual triggering condition which, if it is not verified, keeps the method in the mode used.

2. Method according to Claim 1, characterised in that, when the invalidation mode is used, the method distinguishes between hard misses, which correspond to the absence of a copy sought in the memory block, and soft misses, which correspond to the presence of the copy sought but invalidated, and in that it uses the soft misses as a criterion for the ineffectiveness of the invalidation mode and/or for the condition for triggering the invalidation mode to the update mode when the threshold in question has been reached.

3. Method according to one of Claims 1 or 2, characterised in that, when the condition of actual triggering is not verified for changing from the update mode to the invalidation mode, the method consists in using a second threshold (T) indicating that the mode used is effective but too unwieldy to manage and, when the second threshold has been reached, in using collective invalidation of block copies and returning to the update mode.

4. Method according to one of Claims 1 to 3, characterised in that it incorporates into at least one block copy at least one code bit (C), representing at least one of the modes (update - invalidation) and/or at least one of the transitional modes characterised by the condition of actual triggering.

5. Computer system (10) comprising a hierarchy of memories (12, 13) and means for the coherent management of exchanges between the memories by switching between an update mode and an invalidation mode for copies of memory blocks, characterised in that the management means use the method according to one of Claims 1 to 4.

6. Memory (12, 13) comprising a data memory for storing copies of memory blocks, and a control circuit, characterised in that the control circuit includes a hard-wired algorithm for implementing the method defined by one of Claims 1 to 4.
